# FASCICULE DE BREVET EUROPEEN

(11) **EP 0 391 821 B1**
(45) Date de publication et mention de la délivrance du brevet: **07.09.1994**
(21) Numéro de dépôt: 90440031.4
(22) Date de dépôt: 05.04.1990
(51) Int. Cl.: A01B 19/06, A01B 23/04

(54) **Machine agricole de travail du sol avec châssis perfectionné**
Bodenbearbeitungsmaschine mit verbessertem Rahmen
Soil working machine with improved frame

(30) Priorité: 06.04.1989 FR 8904704
(43) Date de publication de la demande: 10.10.1990
(73) Titulaire: KUHN S.A., F-67700 Saverne (FR)
(72) Inventeur: Oberle, Edmond, F-67700 Saverne (FR); Frumholtz, Johnny, F-67700 Saverne (FR)

(56) Documents cités:
- EP-A- 268 540
- EP-A- 287 489
- DE-U- 8 136 196
- FR-A- 2 321 826
- FR-A- 2 368 870
- GB-A- 2 147 784
- Prospectus Kuhn Herse Alternative HA 300-300D-400-400D, Pièces de rechange No. 924 4020.00

## Description

La présente invention concerne une machine agricole de travail du sol comportant un châssis auquel sont liées, par une pluralité de bras oscillants deux rangées de deux barres, disposées l'une derrière l'autre et sétendant au moins sensiblement perpendiculairement à la direction d'avance au travail, chacune desdites barres étant :
- liée au châssis par au moins deux bras oscillants, dont chacun est lié au châssis et à la barre respectivement au moyen d'une articulation correspondante d'axe dirigé au moins sensiblement parallèlement à la direction d'avance au travail,
- munie d'outils, et
- animée d'un mouvement alternatif dans une direction au moins sensiblement perpendiculaire à la direction d'avance au travail, de telle sorte que les deux barres d'une même rangée soient au moins sensiblement en opposition de phase, tandis que le mouvement de l'une des rangées soit au moins sensiblement déphasé de 90° par rapport au mouvement de l'autre rangée,
ledit mouvement étant généré par un dispositif à bielles-excentriques, ledit châssis qui présente un plan vertical central dirigé suivant la direction d'avance au travail et qui est muni de deux chapes inférieures prévues pour l'attelage de la machine à un véhicule tracteur, comportant :
- une première structure formée par deux longerons dirigés au moins sensiblement perpendiculairement à la direction d'avance au travail, disposés à une certaine distance l'un derrière l'autre dans un plan au moins sensiblement horizontal et liés entre eux au moyen de nervures soudées auxdits longerons,
- une deuxième structure formée par deux montants fixés à leur extrémité inférieure respective à la première structure dans le voisinage des deux chapes inférieures et liés entre eux par soudure à leur extrémité supérieure, ladite deuxième structure comportant, à sa partie supérieure, une chape supérieure également prévue pour l'attelage de la machine audit véhicule tracteur, et
- une troisième structure formée par deux profilés dont chacun s'étend depuis le montant correspondant de la deuxième structure, auquel il est soudé, en direction de l'extrémité correspondante de la première structure, jusqu'au-delà du milieu de la partie correspondante de la première structure à laquelle il est fixé.

Une telle machine de travail du sol est connue par le document "catalogue pièces de rechange herse alternative HA KUHN référence : 924 4020 00-8710". Cette machine agricole de travail du sol comporte un châssis auquel sont liées, par une pluralité de bras oscillants, deux rangées de deux barres, disposées l'une derrière l'autre et s'étendant perpendiculairement à la direction d'avance au travail.

Chacune de ces barres est liée au châssis par deux bras oscillants dont chacun est lié au châssis et à la barre respectivement au moyen d'une articulation correspondante d'axe dirigé parallèlement à la direction d'avance au travail. Chaque barre est du reste munie d'outils de travail du sol et est animée d'un mouvement alternatif dans une direction perpendiculaire à la direction d'avance au travail.

Ce mouvement alternatif est tel que les deux barres d'une même rangée soient en opposition de phase, tandis que le mouvement de l'une des rangées soit déphasé de 90° par rapport au mouvement de l'autre rangée. Ce mouvement alternatif est généré par un dispositif à bielles excentriques supporté par le châssis et dont chaque bielle sert à transmettre le mouvement alternatif à la barre correspondante.

La première structure du châssis de cette machine connue est formée par deux longerons creux dirigés perpendiculairement à la direction d'avance au travail et disposés à une certaine distance l'un derrière l'autre dans un plan horizontal. Ces deux longerons sont liés entre eux essentiellement au moyen de cinq nervures, à savoir :
- une plaque latérale prévue à chaque extrémité des deux longerons et s'étendant dans un plan vertical dirigé suivant la direction d'avance au travail : ces plaques latérales servent également à la liaison d'un rouleau prévu derrière les rangées de barres,
- une première nervure prévue entre la partie centrale des longerons : cette première nervure sert également à la fixation du dispositif à bielles-excentriques, et
- deux secondes nervures s étendant de part et d'autre de la première nervure dans le voisinage de deux chapes inférieures prévues pour l'attelage de la machine à un véhicule tracteur : ces secondes nervures servent également à la fixation de la deuxième structure du châssis sur la première structure.

Ces nervures sont toutes soudées aux deux longerons.

La deuxième structure du châssis de cette machine connue est formée par deux montants. Chaque montant est muni à son extrémité inférieure d'une plaque dans laquelle est prévu un certain nombre de trous. A leur extrémité supérieure respective, les deux montants sont soudés l'un à l'autre et supportent une chape qui y est liée par soudage et qui est également prévue pour l'attelage de la machine au véhicule tracteur.

La deuxième structure ainsi formée est liée à la première structure par l'intermédiaire de boulons traversant les trous prévus dans les plaques des montants et des trous prévus dans les deux secondes nervures de la première structure.

Le châssis de ladite machine connue comporte, en sus, une troisième structure formée par deux profilés ayant chacun une section en forme de U renversé. Chaque profilé s'étend depuis la partie médiane du montant correspondant de la deuxième structure, auquel il est soudé, en direction de l'extrémité correspondante de la première structure, jusqu'au-delà du milieu de la partie correspondante de la première structure. Chaque profilé comporte à l'extrémité inférieure de chacune de ses branches verticales, une aile horizontale par l'intermédiaire de laquelle il repose sur les longerons de la première structure. Dans chacune de ces ailes ainsi que dans le longeron correspondant sont prévus des trous de passage de boulons par l'intermédiaire desquels le profilé est fixé sur la première structure.

Durant l'utilisation de cette machine connue, de nombreuses fissures sont apparues sur le châssis de celle-ci après un certain temps de travail.

Dans le document FR-A-2 321 826 est décrite une machine agricole de travail du sol du type herse rotative, comportant une pluralité de rotors équipés d'outils et disposés l'un à côté de l'autre suivant une rangée perpendiculaire à la direction d'avance au travail.

Ces rotors sont destinés à être entraînés en rotation à partir de la prise de force du véhicule tracteur auquel la machine est attelée durant l'utilisation. Chaque rotor tourne autour d'un axe de rotation vertical correspondant. Du reste, la transmission du mouvement est telle que deux rotors adjacents tournent en sens contraires.

Ces rotors sont supportés par un châssis.

Ce châssis comporte une première structure formée par deux longerons creux dirigés perpendiculairement à la direction d'avance au travail et disposés à une certaine distance l'un derrière l'autre dans un plan horizontal. Ces deux longerons sont liés entre eux au moyen de nervures, à savoir :
- une plaque latérale prévue à chaque extrémité des deux longerons et s'étendant dans un plan vertical dirigé sensiblement suivant la direction d'avance au travail, et
- un certain nombre de plats s'étendant entre les deux longerons de manière régulièrement espacée le long de ces derniers.

Ces deux plaques latérales et ces plats sont soudés aux deux longerons.

Le châssis de cette machine connue comporte une deuxième structure formée par deux montants qui supportent à leur extrémité supérieure une chape prévue pour l'attelage de la machine au véhicule tracteur.

Il n'est pas précisé comment ces deux montants sont fixés au longeron avant de la première structure, mais il peut être supposé que ceux-ci y soient soudés.

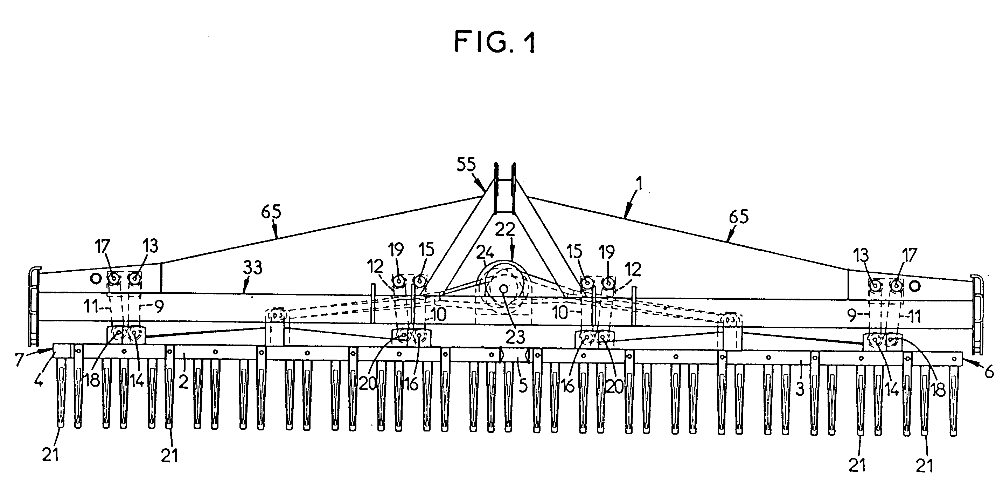

La description ne renseigne pas non plus sur la forme des montants. Il peut cependant être déduit de la figure 1 que chaque montant est formé par un plat.

Le châssis de cette machine connue comporte, en sus, une troisième structure formée par deux jambes d'appui tubulaires. Chaque jambe d'appui s'étend depuis le sommet de la deuxième structure à laquelle elle est soudée, vers l'arrière, et quelque peu vers l'extérieur jusqu'au longeron arrière de la première structure auquel elle est également soudée.

Dans cette machine agricole de travail du sol connue, les rotors équipés d'outils sont animés d'un mouvement rotatif. Les problèmes spécifiques au mouvement alternatif n'existent donc pas sur cette machine.

Dans le document DE-U-81 36196 est également décrite une machine agricole de travail du sol du type herse rotative comportant une pluralité de rotors équipés d'outils et disposés l'un à côté de l'autre suivant une rangée perpendiculaire à la direction d'avance au travail.

Ces rotors sont destinés à être entraînés en rotation à partir de la prise de force du véhicule tracteur auquel est attelée la machine de sorte à tourner autour d'un axe de rotation vertical correspondant. Du reste, la transmission du mouvement est telle que deux routors adjacents tournent en sens contraires.

Ces rotors sont supportés par un châssis.

Ce châssis comporte une première structure formée par une poutre creuse dans laquelle sont guidés en rotation les rotors et qui contient les roues dentées prévues pour l'entraînement sychrone des rotors. Cette poutre creuse s'étend horizontalement et perpendiculairement à la direction d'avance au travail.

Le châssis de cette machine connue comporte aussi une deuxième structure formée par deux montants qui sont fixés l'un à l'autre à leur partie supérieure et y forment une chape prévue pour l'attelage de la machine au véhicule tracteur.

Ce châssis comporte enfin encore une troisième structure formée par deux barres plates. Chaque barre s'étend depuis la partie supérieure du montant correspondant de la deuxième structure, auquel elle est fixée, en direction de l'extrémité correspondante de la poutre creuse jusqu'au-delà du milieu de la partie correspondante de celle-ci.

Cette troisième structure a pour fonction de transmettre directement au dispositif permettant d'atteler la machine au vehicule tracteur, les chocs qui s'éxercent durant le travail sur une barre de protection prévue à l'avant de la poutre creuse dans le but de soulager cette dernière.

Dans cette machine agricole de travail du sol connue, les problèmes spécifiques au mouvement alternatif n'existent pas non plus.

La présente invention a pour objectif de perfectionner la construction du châssis de la machine décrite dans la partie introductive.

Pour atteindre cet objectif, la machine agricole de travail du sol selon la présente invention est caractérisée par le fait que :
a) chaque montant de la deuxième structure comporte un tube soudé à son extrémité inférieure à la première structure,
b) chaque profilé de la troisième structure est formée par une poutre creuse fermée soudée, à son extrémité proche du plan vertical central du châssis, à la partie supérieure du montant respectif de la deuxième structure et, à son extrémité éloignée dudit plan vertical central, directement ou indirectement à la première structure,
c) la troisième structure comporte en sus des traverses soudées au profilé correspondant ou formant une partie intégrante de celui-ci, et soudées à la première structure, et dont certaines forment une triangulation au moins sensiblement continue.

Grâce à cette construction, le châssis de la machine agricole de travail du sol selon l'invention est substantiellement plus rigide que celui de la machine connue sans que sa masse ait toutefois été beaucoup augmentée.

La fréquence propre du châssis a ainsi pu être substantiellement augmentée pour l'éloigner des fréquences d'excitation (fréquences induites par le déplacement des barres à outils).

Selon une caractéristique supplémentaire de l'invention, l'écartement entre les extrémités inférieures des deux tubes de montant de la deuxième structure est quelque peu inférieur à l'écartement entre les deux chapes inférieures prévues pour l'attelage de la machine au véhicule tracteur. Ceci a été possible grâce au fait que la deuxième structure et la troisième structure sont soudées à la première structure. Les deux tubes de montant de la deuxième structure sont ainsi, en vue suivant la direction d'avance au travail, relativement redressés tout en étant capables d'absorber les efforts qui s'appliquent au niveau de la chape supérieure qu'ils supportent à leur partie supérieure. Les deux tubes de montant ainsi redressés, participent grandement à la rigidité de la partie centrale du châssis.

Il peut également être prévu dans l'invention que des traverses soient chacune formées par une tôle plane s'étendant perpendiculairement ou sensiblement perpendiculairement à un plan vertical longitudinal que présente le châssis.

Il peut en sus être prévu dans l'invention que des traverses soient chacune formées par une tôle de liaison ayant une forte inclinaison vers le haut ou étant verticale, et perpendiculaire ou sensiblement perpendiculaire à la direction d'avance au travail.

Dans le cas d'un châssis pourvu de ces deux types de traverses, il est avantageux qu'à chaque profilé soient associées deux tôles de liaison et que les traverses du premier type s'étendent entre lesdites tôles de liaison et soient soudées à ces dernières.

Dans une réalisation, il est prévu qu'à chaque profilé soient associées deux tôles de liaison, une tôle de liaison avant qui ferme l'espace avant formé entre ledit profilé, le longeron avant de la première structure et le tube de montant correpondant de la deuxième structure, et une tôle de liaison arrière qui ferme en grande partie au moins l'espace arrière formé entre ledit profilé et la partie du longeron arrière de la première structure s'étendant du même côté que ledit profilé. Chaque tôle de liaison avant est soudée au longeron avant et au tube de montant respectif, et chaque tôle de liaison arrière est soudée au longeron arrière.

Chaque tôle de liaison arrière peut être pourvue d'une découpe au niveau de la partie centrale du châssis. De cette sorte, on crée une ouverture par laquelle pourra être introduit le mécanisme de transformation du mouvement rotatif en mouvement alternatif lors de son montage sur le châssis. Dans ce cas, il sera avantageux, après mise en place dudit mécanisme, de visser une traverse de raccord sur les deux tôles de liaison arrière et sur la première structure, de sorte à lier entre elles lesdites tôles de liaison arrière au niveau desdites découpes.

Préférentiellement, cette traverse de raccord ferme en grande partie au moins l'ouverture formée par les découpes réalisées dans les tôles de liaison arrière.

Dans l'invention, il est également prévu que la largeur de chaque profilé, mesurée suivant la direction d'avance au travail, augmente depuis l'extrémité du profilé proche du plan vertical central du châssis, où le profilé est soudé à la deuxième structure jusqu'à son extrémité éloignée du plan vertical central du châssis, où le profilé est soudé directement ou indirectement à la première structure.

Préférentiellement, cette largeur augmente de manière constante ou sensiblement constante.

Il peut-être prévu qu'à l'extrémité éloignée du plan vertical central du châssis, où ledit profilé est soudé directement ou indirectement à la première structure, ladite largeur soit égale ou sensiblement égale à la distance intérieure qui sépare les deux longerons de la première structure.

Selon une réalisation, il est prévu que chaque profilé s'étende, à partir de son extrémité proche du plan vertical central du châssis où ledit profilé est soudé à la deuxième structure, vers le bas jusqu'au niveau de la première structure ou il est directement ou indirectement soudé.

Dans ce cas, l'extrémité de chaque profilé, éloignée du plan vertical central du châssis où ledit profilé est soudé directement ou indirectement à la première structure, peut avantageusement s'étendre dans le voisinage intérieur des articulations extérieures liant au châssis les bras oscillants extérieurs des deux barres s'étendant du même côté que ledit profilé.

Pour améliorer, dans ce cas, encore davantage la rigidité du châssis, il est prévu que la troisième structure comporte en sus deux profilés en U ouverts vers le bas, dont chacun s'étend depuis l'extrémité du profilé correspondant où celui-ci est soudé directement ou indirectement à la première structure jusqu'a l'extrémité extérieure correspondante de ladite première structure. Il est également prévu que chaque profilé en U ouvert vers le bas soit soudé au profilé correspondant ainsi qu'à la première structure.

Afin d'éviter que la face supérieure de chaque profilé en U liant les deux ailes de celui-ci ne vibre sous l'effet des excitations, il est prévu qu'elle soit rigidifiée par un organe de rigidification.

Dans une réalisation, la largeur du profilé en U est égale ou sensiblement égale à la largeur de l'extrémité du profilé correspondant éloignée du plan vertical central du châssis.

Lorsqu'à chaque extrémité de la première structure est soudée une plaque latérale servant à la liaison d'un rouleau, il est également prévu que chaque profilé en U soit soudé à la plaque latérale correspondante.

Avantageusement, chaque poutre creuse fermée peut présenter des sections - faites suivant des plans parallèles au plan vertical central du châssis - ayant une forme de quadrilatère comportant deux côtés représentant la face supérieure, respectivement la face inférieure, qui s'étendent suivant la direction d'avance au travail ou sensiblement suivant ladite direction. Il peut également être prévu que chaque poutre creuse fermée comporte une face avant et une face arrière plus petites que la face supérieure et la face intérieure.

Préférentiellement, il est prévu, à l'intérieur de chaque poutre creuse fermée, une nervure qui lie entre elles la face supérieure et la face inférieure de ladite poutre creuse fermée, auxquelles elle est soudée. On évite ainsi que la face supérieure et la face inférieure ne vibrent sous l'action des excitations.

Cette nervure s'étend à mi-distance ou sensiblement à mi-distance entre la face avant et la face arrière de la poutre creuse fermée respective.

Avantageusement, il est également prévu que la nervure s'étende sur toute la longueur ou sensiblement sur toute la longueur de la poutre creuse fermée correspondante.

D'autres caractéristiques de l'invention sont contenues dans les autres sous-revendications et ressortent clairement de la description suivante d'un exemple non limitatif de réalisation de l'invention faite en référence au dessin annexé sur lequel :
- la figure 1 représente une vue de devant d'une machine agricole de travail du sol selon l'invention ;
- la figure 2 représente une vue de dessus de la machine agricole de travail du sol selon l'invention telle que représentée sur la figure 1 ;
- la figure 3 représente une vue de devant du châssis de la machine agricole de travail du sol selon l'invention telle que représentée sur les figures 1 et 2 ;
- la figure 4 représente une vue de dessus du châssis tel que représenté sur la figure 3 ;
- la figure 5 représente une vue de derrière du châssis tel que représenté sur les figures 3 et 4 ;
- la figure 6a représente une vue en coupe selon le plan VIa défini sur la figure 5 ;
- la figure 6b représente une vue en coupe selon le plan VIb défini sur la figure 5 ;
- la figure 7a représente une vue en coupe selon le plan VIIa défini sur la figure 5 ;
- la figure 7b représente une vue en coupe selon le plan VIIb défini sur la figure 5.

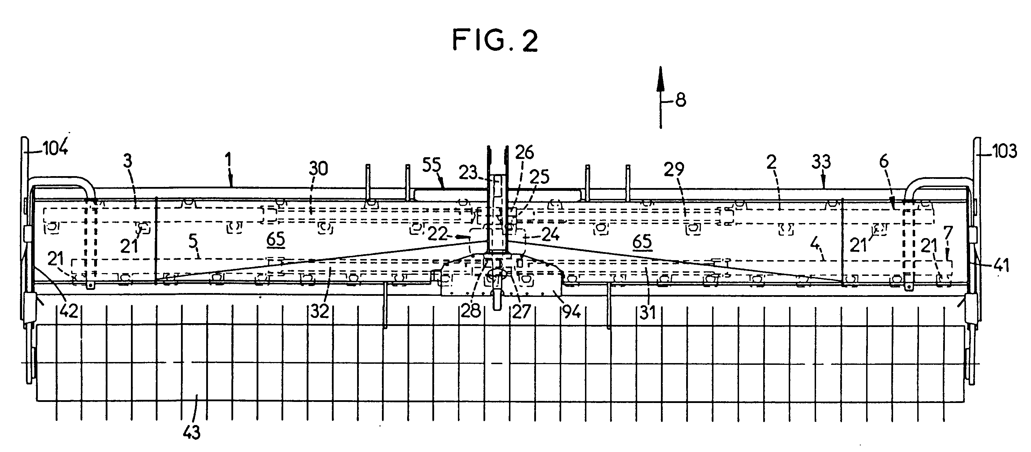

La machine agricole de travail du sol, telle que représentée sur les figures, comporte un châssis (1) auquel sont liées des barres à outils (2, 3, 4, 5). Ces barres à outils (2, 3, 4, 5) sont réparties suivant deux rangées (6 ; 7) disposées l'une derrière l'autre, compte tenu du sens d'avance (8) au travail, et s'étendant sensiblement perpendiculairement à la direction d'avance (8) au travail (figure 2).

Les barres à outils (2, 3) de la rangée avant (6) sont liées au châssis (1) par des bras oscillants extérieurs (9) et par des bras oscillants intérieurs (10), tandis que les barres à outils (4, 5) de la rangée arrière (7) sont liées au châssis (1) par des bras oscillants extérieurs (11) et des bras oscillants intérieurs (12).

Les bras oscillants extérieurs (9) des barres à outils (2, 3) de la rangée avant (6) sont articulés au châssis (1), respectivement à leur barre à outils (2, 3) correspondante, par des articulations (13), respectivement (14), tandis que les bras oscillants intérieurs (10) desdites barres à outils (2, 3) sont articulés au châssis (1), respectivement à leur barre à outils (2, 3) correspondante, par des articulations (15), respectivement (16).

Les bras oscillants extérieurs (11) des barres à outils (4, 5) de la rangée arrière (7) sont articulés au châssis (1), respectivement à leur barre (4, 5) correspondante, par des articulations (17), respectivement (18), tandis que les bras oscillants intérieurs (12) desdites barres à outils (4, 5) sont articulés au châssis (1), respectivement à leur barre (4, 5) correspondante, par des articulations (19), respectivement (20).

Les articulations (13, 14, 15, 16, 17, 18, 19, 20) ont chacune un axe dirigé sensiblement parallèlement à la direction d'avance (8) au travail.

Sur les figures 1 et 2, on voit du reste que les bras oscillants extérieurs (9 ; 11) des barres à outils (2 : 4) ou (3 ; 5) sont disposés côte à côte dans une direction transversale à la direction d'avance (8) au travail. De même, les bras oscillants intérieurs (10 ; 12) des barres à outils (2 ; 4) ou (3 ; 5) sont également disposés côte à côte dans une direction transversale à la direction d'avance (8) au travail.

Chaque barre à outils (2, 3, 4, 5) est munie d'un certain nombre d'outils de travail du sol, tels que des dents (21).

Les barres à outils (2, 3, 4, 5) sont animées d'un mouvement de va-et-vient alternatif dans une direction sensiblement perpendiculaire à la direction d'avance (8) au travail. Le mouvement est fourni par un dispositif à bielles-excentriques (22) fixé dans la partie centrale du châssis (1). Ce dispositif à bielles-excentriques (22) est connu de l'homme de l'art. Il transforme le mouvement rotatif reçu d'une source motrice, telle que la prise de force d'un véhicule tracteur (non représenté) auquel est attelée la machine agricole de travail du sol, en un mouvement alternatif qu'il transmet aux différentes barres à outils (2, 3, 4, 5).

Ce dispositif à bielles-excentriques (22) comporte un arbre d'entrée (23) d'axe de rotation dirigé sensiblement parallèlement à la direction d'avance (8) au travail, et un palier (24) fixé sur le châssis (1) et dans lequel est guidé en rotation l'arbre (23). A l'avant du palier (24), l'arbre (23) supporte deux excentriques (25, 26) et à l'arrière dudit palier (24), deux excentriques (27, 28). Les excentriques (25, 26, 27, 28) entraînent chacun leur barre à outils (2, 3, 4, 5) correspondante au moyen d'une bielle (29, 30, 31, 32). Les excentriques (25, 26), s'étendant à l'avant du palier (24) et prévus pour l'entraînement des barres à outils (2, 3) de la rangée avant (6), sont sensiblement en opposition de phase. De même, les excentriques (27, 28), s'étendant à l'arrière du palier (24) et prévus pour l'entraînement des barres à outils (4, 5) de la rangée arrière (7), sont également en opposition de phase. Par ailleurs, les excentriques (27, 28) de la rangée arrière (7) de barres à outils (4, 5) sont sensiblement décalés de 90° par rapport aux excentriques (25, 26) de la rangée avant (6) de barres à outils (2, 3). De cette sorte, les barres à outils (2, 3, 4, 5) d'une même rangée (6, 7) sont sensiblement en opposition de phase, tandis que le mouvement de l'une (6) des rangées (6, 7) de barres à outils (2, 3, 4, 5) est sensiblement décalé de 90° par rapport au mouvement de l'autre (7) desdites rangées (6, 7) de barres à outils (2, 3, 4, 5).

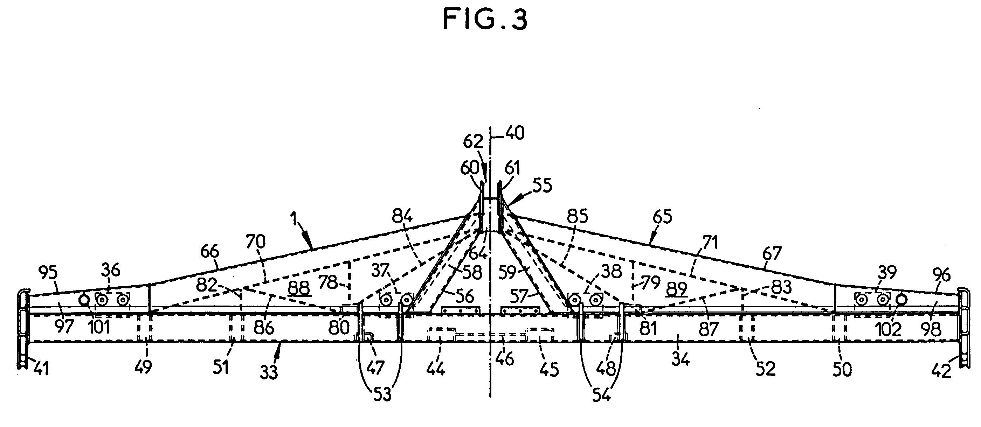

Sur les figures 3 à 5, on voit que le châssis (1) comporte une première structure (33) comprenant deux longerons creux (34, 35) diriges sensiblement perpendiculairement à la direction d'avance (8) au travail et disposes, compte tenu du sens d'avance (8) au travail, à une certaine distance l'un derrière l'autre dans un plan sensiblement horizontal.

Les deux longerons (34, 35) supportent quatre double-chapes (36, 37, 38, 39) destinées à la liaison articulée des bras oscillants (9, 10, 11, 12) au châssis (1). Les deux double-chapes extérieures (36 ; 39), correspondant aux bras oscillants extérieurs (9, 11), s'étendent chacune près d'une extrémité des deux longerons (34, 35), tandis que les deux double-chapes intérieures (37, 38), correspondant aux bras oscillants intérieurs (10, 12), s'étendent dans la partie médiane des deux longerons (34, 35), de part et d'autre du plan vertical central (40) dirigé suivant la direction d'avance (8) au travail.

La première structure (33) comporte par ailleurs un certain nombre de nervures soudées aux deux longerons (34, 35), de sorte à lier ceux-ci entre eux, a savoir :
- une plaque latérale (41, 42) prévue à chaque extrémité des deux longerons (34, 35) : ces plaques latérales (41, 42) s'étendent chacune dans un plan vertical dirigé sensiblement suivant la direction d'avance (8) au travail ; ces plaques latérales (41, 42) servent aussi à la liaison d'un rouleau (43) (figure 2) s'étendant derrière les deux rangées (6, 7) de barres à outils (2, 3, 4, 5), sensiblement parallèlement à celles-ci. Etant donné que cette liaison est parfaitement connue de l'homme de l'art, elle ne sera pas décrite plus en détail ;
- deux premiers tubes de nervurage (44, 45), de section rectangulaire, s'étendant sensiblement suivant la direction d'avance (8) au travail et symétriquement de part et d'autre du plan vertical de symétrie (40) ; ces deux premiers tubes de nervurage (44, 45) sont liés entre eux au moyen d'une plaque de montage (46) horizontale qui est soudée auxdits premiers tubes de nervurage (44, 45) de même qu'aux deux longerons (34, 35) ; cette plaque de montage (46) sert notamment au montage du dispositif à bielles-excentriques (22) sur le châssis (1) ;
- deux deuxièmes tubes de nervurage (47, 48), de section rectangulaire, s'étendant sensiblement suivant la direction d'avance (8) au travail ; chacun de ces deux deuxièmes tubes de nervurage (47, 48) s'étend sensiblement dans le voisinage de l'une respective des double-chapes intérieures (37, 38) prévues pour la liaison articulée des bras oscillants intérieurs (10, 12) au châssis (1) ;
- deux troisièmes tubes de nervurage (49, 50), de section rectangulaire, s'étendant sensiblement suivant la direction d'avance (8) au travail ; chacun de ces deux troisièmes tubes de nervurage (49, 50) s'étend sensiblement dans le voisinage de l'une respective des double-chapes extérieures (36, 39) prévues pour la liaison articulée des bras oscillants extérieurs (9, 11) au châssis (1) ; et
- deux quatrièmes tubes de nervurage (51, 52), de section rectangulaire, s'étendant sensiblement suivant la direction d'avance (8) au travail ; chacun de ces deux quatrièmes tubes de nervurage (51, 52) s'étend, en sus, sensiblement à mi-distance entre le deuxième tube de nervurage (47, 48) et le troisième tube de nervurage (49, 50) respectifs.

A l'avant, le longeron avant (34) est encore muni de deux chapes inférieures (53, 54) s'étendant symétriquement par rapport au plan vertical central (40) et chacune sensiblement dans le voisinage de l'une respective des double-chapes intérieures (37, 38) prévues pour la liaison articulée des bras oscillants intérieurs (10, 12) au châssis (1).

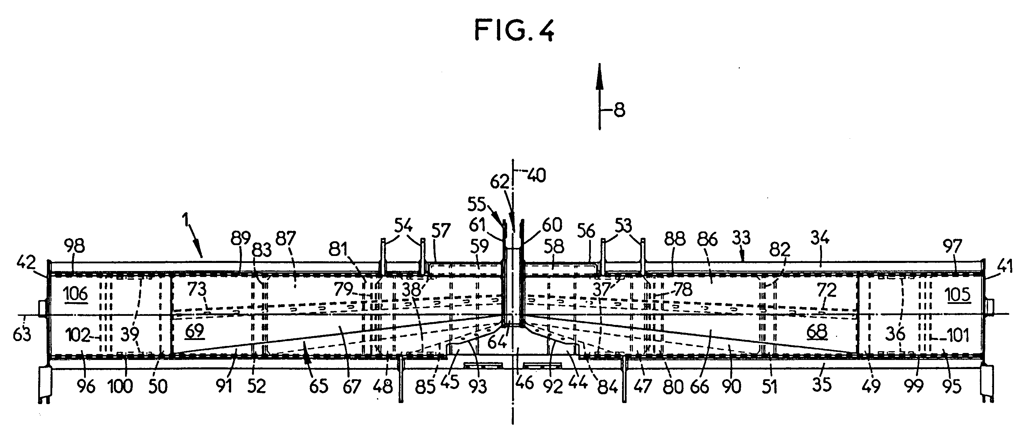

Le châssis (1) comporte ensuite une deuxième structure (55) comprenant deux montants (56, 57) s'étendant symétriquement par rapport au plan vertical central (40). Chaque montant (56, 57) est formé, d'une part, par un tube de montant (58, 59), de section rectangulaire, soudé à son extrémité inférieure sur le dessus du longeron avant (34) de la première structure (33), dans le voisinage de l'une respective des double-chapes intérieures (37, 38) prévues pour la liaison articulée des bras oscillants intérieurs (10, 12) au châssis (1), et, d'autre part, par une plaque (60, 61) soudée à l'extrémité supérieure du tube de montant (58, 59) et s'étendant dans un plan vertical dirigé sensiblement suivant la direction d'avance (8) au travail. Chaque tube de montant (58, 59) s'étend à partir de son extrémité inférieure vers le haut et vers le plan vertical central (40), de sorte que les deux tubes de montant (58, 59) convergent vers ledit plan vertical central (40). En vue de dessus (figure 4), on voit que les deux tubes de montant (58, 59) s'étendent, en sus, dans un plan vertical dirigé perpendiculairement à la direction d'avance (8) au travail.

Les deux plaques (60, 61) sont agencées symétriquement par rapport au plan vertical central (40) et comportent chacune un ou plusieurs trous, de sorte à former une chape supérieure (62).

Cette chape supérieure (62) et les deux chapes inférieures (53, 54) servent à l'attelage de la machine agricole de travail du sol au dispositif d'attelage à trois points d'un véhicule tracteur (non représenté).

En vue de dessus (figure 4), on voit que les deux plaques (60, 61), formant la chape supérieure (62), s'étendent, à partir des tubes de montant (58, 59), vers l'arrière jusqu'au-delà du plan vertical longitudinal (63) s'étendant à mi-distance entre les deux longerons (34, 35) de la première structure (33). Leur écartement respectif, c'est-à-dire l'écartement respectif entre l'extrémité supérieure des deux montants (56, 57), est maintenu par un corps creux (64) soudé aux deux plaques (60, 61).

Le châssis (1) comporte encore une troisième structure (65) comprenant deux poutres creuses fermées (66, 67) s'étendant symétriquement par rapport au plan vertical central (40). Chaque poutre creuse fermée (66, 67) est soudée, à son extrémité proche du plan vertical central (40), à la plaque (60, 61) du montant (56, 57) respectif de la deuxième structure (55), et, à son extrémité éloignée dudit plan vertical central (40), au troisième tube de nervurage (49, 50) respectif de la première structure (33). Chaque poutre creuse fermée (66, 67) s'étend ainsi à partir de son extrémité proche du plan vertical central (40) vers le bas en direction de l'extrémité respective des deux longerons (34, 35) de la première structure (33). Du reste, l'extrémité de chaque poutre creuse fermée (66, 67), éloignée du plan vertical central (40), s'étend plus près de l'extrémité respective des deux longerons (34, 35) que de leur partie centrale.

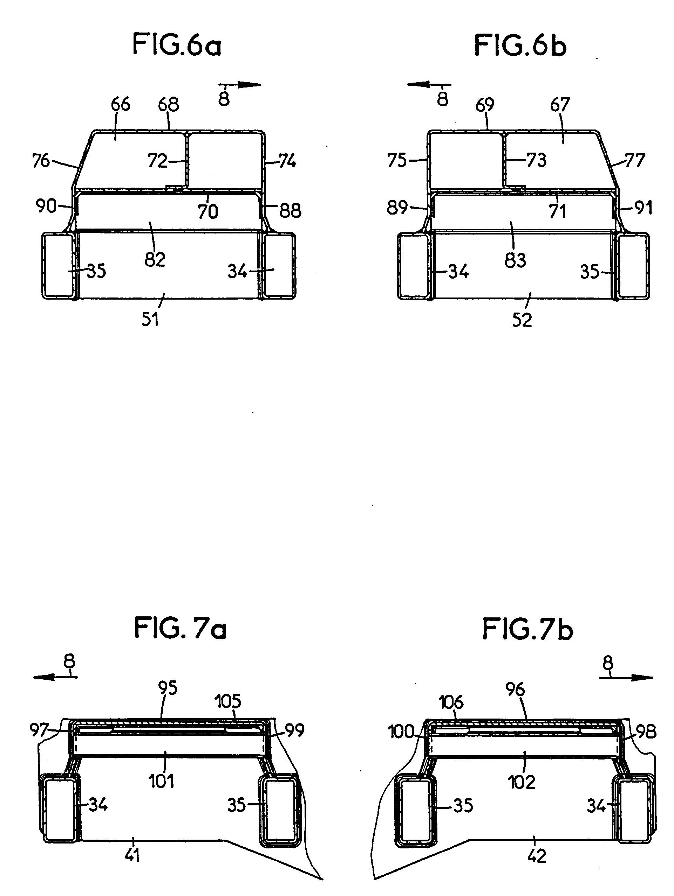

Comme visible sur (es figures 6a et 6b, chaque poutre creuse fermée (66, 67) présente des sections -faites suivant un plan parallèle au plan vertical central (40)-en forme de trapèze rectangle, dont la petite base qui représente la face supérieure (68, 69), et la grande base qui représente la face inférieure (70, 71) de ladite poutre creuse fermée (66, 67), s'étendent suivant la direction d'avance (8) au travail.

En vue de dessus (figure 4), on voit que la largeur de chaque poutre creuse fermée (66, 67), mesurée suivant la direction d'avance (8) au travail, augmente de manière sensiblement constante depuis l'extrémité proche du plan vertical central (40), où la poutre creuse fermée (66, 67) est soudée au montant (56, 57) respectif de la deuxième structure (55), jusqu'à l'extrémité éloignée du plan vertical central (40), où la poutre creuse fermée (66, 67) est soudée au troisième tube de nervurage (49, 50) respectif de la première structure (33). A cette dernière extrémité, la largeur de chaque poutre creuse fermée (66, 67) est sensiblement égale à l'écartement intérieur entre les deux longerons (34, 35) de la première structure (33).

Sur les figures 6a et 6b, il apparaît également qu'à l'intérieur de chaque poutre creuse fermée (66, 67) est prévue une nervure (72, 73) qui lie entre elles la face supérieure (68, 69) et la face inférieure (70, 71), auxquelles elle est soudée. Cette nervure (72, 73) s'étend sensiblement à mi-distance entre la face avant (74, 75) et la face arrière (76, 77) de ladite poutre creuse fermée (66, 67). Sur la figure 4, on voit par ailleurs que ladite nervure (72, 73) s'étend sur toute la longueur de la poutre creuse fermée (66, 67).

Chaque poutre creuse fermée (66, 67) est liée aux longerons (34, 35) de la première structure (33) par un certain nombre de traverses, à savoir :
- une première traverse (78, 79) s'étendant sensiblement verticalement et prévue, en partant de l'extrémité proche du plan vertical central (40), sensiblement au premier tiers de la longueur de la poutre creuse fermée (66, 67) ; cette première traverse (78, 79) est soudée, à son extrémité supérieure, à la face inférieure (70, 71) de la poutre creuse fermée (66, 67) et, à son extrémité inférieure, à une traverse de liaison (80, 81) formée par un tube rectangulaire s'étendant sensiblement suivant la direction d'avance (8) au travail et reposant sur le dessus des longerons (34, 35) de la première structure (33), auxquels il est soudé ;
- une deuxième traverse (82, 83) s'étendant sensiblement verticalement et prévue, en partant de l'extrémité proche du plan vertical central (40), sensiblement au deuxième tiers de la longueur de la poutre creuse fermée (66, 67) ; cette deuxième traverse (82, 83) est soudée, à son extrémité supérieure, à la face inférieure (70, 71) de la poutre creuse fermée (66, 67) et, à son extrémité inférieure, au quatrième tube de nervurage (51, 52) respectif de la première structure (33) ;
- une troisième traverse (84, 85) s'étendant obliquement vers le bas depuis l'extrémité de la poutre creuse fermée (66, 67) proche du plan vertical central (40), où ladite poutre creuse fermée (66, 67) est soudée au montant (56, 57) respectif de la deuxième structure (55), jusqu'à la traverse de liaison (80, 81) ; à son extrémité supérieure, la troisième traverse (84, 85) est soudée à la face inférieure (70, 71) de la poutre creuse fermée (66, 67) et/ou au montant (56, 57) respectif, et, à son extrémité inférieure, à la traverse de liaison (80, 81) ;
- une quatrième traverse (86, 87) s'étendant obliquement vers le haut depuis la traverse de liaison (80, 81) jusqu'au voisinage de l'extrémité supérieure de la deuxième traverse (82, 83) ; à son extrémité inférieure, la quatrième traverse (86, 87) est soudée à la traverse de liaison (80, 81) et, à son extrémité supérieure, à la face inférieure (70, 71) de la poutre de liaison (66, 67) et/ou à l'extrémité supérieure de la deuxième traverse (82, 83):
- une cinquième traverse (tôle de liaison avant) (88, 89) formée par une tôle s'étendant dans un plan sensiblement vertical et sensiblement perpendiculaire à la direction d'avance (8) au travail ; cette tôle de liaison avant (88, 89) ferme l'espace triangulaire avant formé entre la poutre creuse fermée (66, 67), le longeron avant (34) de la première structure (33) et le tube de montant (58, 59) respectif de la deuxième structure (55) ; cette tôle de liaison avant (88, 89) est, en fait, la continuité de la face avant (74, 75) de la poutre creuse fermée (66, 67), tel que cela apparaît sur les figures 6a et 6b ; cette tôle de liaison avant (88, 89) est, par ailleurs, soudée au longeron avant (34) le long de son côté s'étendant dans le voisinage du dessus dudit longeron avant (34), et, au tube de montant (58, 59) respectif, le long de son côté s'étendant dans le voisinage dudit tube de montant (58, 59) ; et
- une sixième traverse (tôle de liaison arrière) (90, 91) formée par une tôle fortement inclinée vers le haut et sensiblement perpendiculaire à la direction d'avance (8) au travail ; cette tôle de liaison arrière (90, 91) ferme, en grande partie, l'espace triangulaire arrière formé entre la poutre creuse fermée (66, 67) et la partie du longeron arrière (35) de la première structure (33) s'étendant du même côté que ladite poutre creuse fermée (66, 67) ; cette tôle de liaison arrière (90, 91) est, en fait, la continuité de la face arrière (76, 77) de la poutre creuse fermée (66, 67), tel que celà apparaît sur les figures 6a et 6b ; cette tôle de liaison arrière (90, 91) est, par ailleurs, soudée au longeron arrière (35) le long de son côté s'étendant dans le voisinage du dessus dudit longeron arrière (35).

Comme visible sur les figures 3 à 5, la première traverse (78, 79), la deuxième traverse (82, 83), la troisième traverse (84, 85) et la quatrième traverse (86, 87) forment une triangulation sensiblement continue. Ces traverses sont chacune formée par une tôle plane s'étendant sensiblement perpendiculairement au plan vertical longitudinal (63) du châssis (1) (figure 4) et entre la tôle de liaison avant (88, 89) et la tôle de liaison arrière (90, 91) respectives. Chacune de ces tôles planes comporte une arête avant s'étendant dans le voisinage de la tôle de liaison avant (88, 89) respective, à laquelle elle est soudée le long de ladite arête avant, et une arête arrière s'étendant dans le voisinage de la tôle de liaison arrière (90, 91) respective, à laquelle elle est soudée le long de ladite arête arrière.

Chaque traverse de liaison (80, 81) s'étend également entre la tôle de liaison avant (88, 89) respective et la tôle de liaison arrière (90, 91) respective, auxquelles elle est soudée.

Dans l'exemple de réalisation décrit, la tôle de liaison avant (88, 89) est la continuité de la face avant (74, 75) de la poutre creuse fermée (66, 67). Elle pourrait cependant, dans le cadre de l'invention, être réalisée séparément, puis être soudée à la poutre creuse fermée (66, 67) le long de son côté s'étendant dans le voisinage de ladite poutre creuse fermée (66, 67).

De même, dans l'exemple de réalisation décrit, la tôle de liaison arrière (90, 91) est la continuité de la face arrière (76, 77) de la poutre creuse fermée (66, 67). Elle pourrait également, dans le cadre de l'invention, être réalisée séparément, puis être soudée à la poutre creuse fermée (66, 67) le long de son côté s'étendant dans le voisinage de ladite poutre creuse fermée (66, 67).

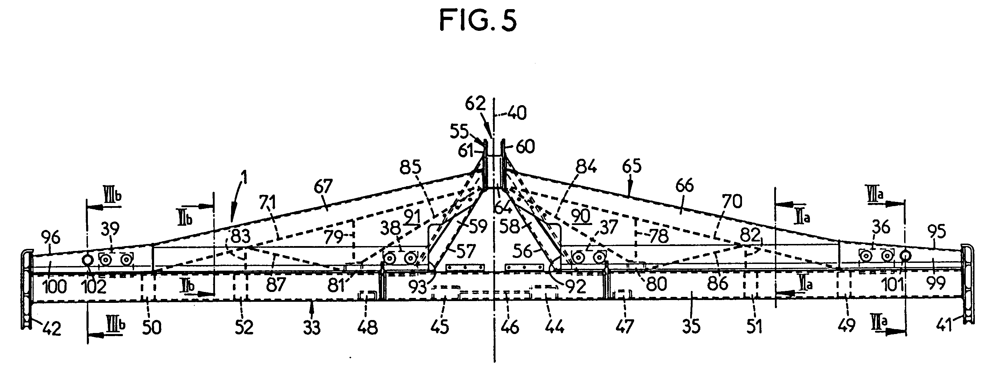

Sur la figure 5, il apparaît très précisément qu'au niveau de la partie centrale du châssis (1), chaque tôle de liaison arrière (90, 91) est pourvue d'une découpe (92, 93) pour former une ouverture par laquelle sera introduit le dispositif à bielles-excentriques (22) lors de son montage sur le châssis (1). Après montage dudit dispositif à bielles-excentriques (22) sur la plaque de montage (46), les deux tôles de liaison arrière (90, 91) sont liées l'une à l'autre au niveau desdites découpes (92, 93) par une traverse de raccord (94) vissée sur le longeron arrière (35) de la première structure (33) et sur chaque tôle arrière de liaison (90, 91).

Comme visible sur la figure 2, cette traverse de raccord (94) est réalisée sous forme de tôle et ferme en grande partie l'ouverture formée par les découpes (92, 93).

Sur les figures 3 à 5, on voit que l'extrémité de chaque poutre creuse fermée (66, 67), éloignée du plan vertical central (40), s'étend dans le voisinage intérieur de la double-chape extérieure (36, 39) respective, c'est-à-dire que chaque poutre creuse fermée (66, 67) s'arrête quelque peu avant ladite double-chape extérieure (36, 39) respective. Dans cette zone, la'troisième structure (65) comporte en sus un profilé en U (95, 96) ouvert vers le bas, qui s'étend entre ladite extrémité de la poutre creuse fermée (66, 67) éloignée du plan vertical central (40), à laquelle il est soudé, et la plaque latérale (41, 42) respective à laquelle il est également soudé. Ledit profilé en U (95, 96) qui coiffe la double-chape extérieure (36, 39) respective, repose avec l'arête libre de son aile avant (97, 98) sur le dessus du longeron avant (34), auquel il est soudé le long de ladite arête libre, et repose avec l'arête libre de son aile arrière (99, 100) sur le dessus du longeron arrière (35), auquel il est soudé le long de ladite arête libre.

Comme notamment visible sur les figures 7a et 7b, l'aile avant (97, 98) et l'aile arrière (99, 100) de chaque profilé en U (95, 96) sont liées entre elles par un tube (101, 102) dont l'axe s'étend sensiblement suivant la direction d'avance (8) au travail et qui est soudé auxdites ailes (97, 98, 99, 100). Chaque tube (101, 102) sert à monter, de manière articulée, un déflecteur latéral (103, 104) (voir figure 2) sur le châssis (1). Ces déflecteurs latéraux (103, 104) sont largement connus de l'homme de l'art et ne seront donc pas décrits plus en détail.

Etant donné que la face supérieure (105, 106) de chaque profilé en U (95, 96), liant l'aile avant (97, 98) à l'aile arrière (99, 100), a une largeur relativement importante, il a été prévu de souder celle-ci directement ou indirectement au tube (101, 102).

Chaque tube (101, 102), liant ainsi l'aile avant (97, 98) à l'aile arrière (99, 100) et soudé directement ou indirectement à la face supérieure (105, 106) du profilé en U (95, 96) respectif, constitue un organe de rigidification dudit profilé en U (95, 96).

On pourra apporter différentes modifications ou améliorations à l'exemple de réalisation décrit sans pour autant sortir du cadre de la présente invention tel que défini par les revendications suivantes.

## Revendications

1. Machine agricole de travail du sol comportant un châssis (1) auquel sont liées, par une pluralité de bras oscillants (9, 10, 11, 12), deux rangées (6, 7) de deux barres (2, 3, 4, 5), disposées l'une derrière l'autre et s'étendant au moins sensiblement perpendiculairement à la direction d'avance (8) au travail, chacune desdites barres (2, 3, 4, 5) étant :
- liée au châssis (1) par au moins deux bras oscillants (9, 10, 11, 12), dont chacun est lié au châssis (1) et à la barre (2, 3, 4, 5) respectivement au moyen d'une articulation (13, 14, 15, 16, 17 18, 19, 20) correspondante d'axe dirigé au moins sensiblement parallèlement à la direction d'avance (8) au travail,
- munie d'outils (21), et
- animée d'un mouvement alternatif dans une direction au moins sensiblement perpendiculaire à la direction d'avance (8) au travail, de telle sorte que les deux barres (2, 3, 4, 5) d'une même rangée (6, 7) soient au moins sensiblement en opposition de phase, tandis que le mouvement de l'une (6) des rangées (6, 7) soit au moins sensiblement déphasé de 90° par rapport au mouvement de l'autre rangée (7),
ledit mouvement étant généré par un dispositif (22) à bielles-excentriques, ledit châssis (1) qui présente un plan vertical central (40) dirigé suivant la direction d'avance (8) au travail et qui est muni de deux chapes inférieures (53, 54) prévues pour l'attelage de la machine à un véhicule tracteur, comportant :
- une première structure (33) formée par deux longerons (34, 35) dirigés au moins sensiblement perpendiculairement à la direction d'avance (8) au travail, disposés à une certaine distance l'un derrière l'autre dans un plan au moins sensiblement horizontal et liés entre eux au moyen de nervures (41, 42, 44, 45, 46, 47, 48, 49, 50, 51, 52) soudées auxdits longerons (34, 35),
- une deuxième structure (55) formée par deux montants (56, 57) fixés à leur extrémité inférieure respective à la première structure (33) dans le voisinage des deux chapes inférieures (53, 54) et liés entre eux par soudure à leur extrémité supérieure, ladite deuxième structure (55) comportant, à sa partie supérieure, une chape supérieure (62) également prévue pour l'attelage de la machine audit véhicule tracteur, et
- une troisième structure (65) formée par deux profilés (66, 67) dont chacun s'étend depuis le montant (56, 57) correspondant de la deuxième structure (55), auquel il est soudé, en direction de l'extrémité correspondante de la première structure (33), jusqu'au delà du milieu de la partie correspondante de la première structure (33) à laquelle il est fixé,
caractérisée par le fait que :
a) chaque montant (56, 57) de la deuxième structure (55) comporte un tube (58, 59) soudé à son extrémité inférieure à la première structure (33),
b) chaque profilé (66, 67) de la troisième structure (65) est formée par une poutre creuse fermée soudée, à son extrémité proche du plan vertical central (40) du châssis (1), à la partie supérieure du montant (56, 57) respectif de la deuxième structure (55) et, à son extrémité éloignée dudit plan vertical central (40), directement ou indirectement à la première structure (33),
c) la troisième structure (65) comporte en sus des traverses (78, 79, 82, 83, 84, 85, 86, 87, 88, 89, 90, 91) soudées au profilé (66, 67) correspondant ou formant une partie intégrante de celui-ci, et soudées à la première structure (33), et dont certaines (78, 79, 82, 83, 84, 85, 86, 87) forment une triangulation au moins sensiblement continue.

2. Machine agricole de travail du sol selon la revendication 1, caractérisée par le fait que l'écartement entre les extrémités inférieures des deux tubes de montant (58, 59) de la deuxième structure (55) est quelque peu inférieur à l'écartement entre les deux chapes inférieures (53, 54).

3. Machine agricole de travail du sol selon la revendication 1 ou 2, caractérisée par le fait que les deux tubes de montant (58, 59) s'étendent dans un plan vertical dirigé perpendiculairement à la direction d'avance (8) au travail, et que chaque tube de montant (58, 59) s'étend, à partir de son extrémité inférieure, vers le haut en direction du plan vertical central (40) du châssis (1).

4. Machine agricole de travail du sol selon l'une au moins des revendications 1 à 3, caractérisée par le fait que la largeur de chaque profilé (66, 67), mesurée suivant la direction d'avance (8) au travail, augmente depuis son extrémité proche du plan vertical central (40) où le profilé (66, 67) est soudé à la deuxième structure (55), jusqu'à son extrémité éloignée du plan vertical central (40) où le profilé (66, 67) est soudé directement ou indirectement à la première structure (33).

5. Machine agricole de travail du sol selon la revendication 4, caractérisée par le fait que ladite largeur augmente de manière au moins sensiblement constante.

6. Machine agricole de travail du sol selon l'une des revendications 1 à 5, caractérisée par le fait qu'à l'extrémité éloignée du plan vertical central (40) où le profilé (66, 67) est soudé directement ou indirectement à la première structure (33), la largeur de chaque profilé (66, 67), mesurée suivant la direction d'avance (8) au travail, est au moins sensiblement égale à la distance intérieure qui sépare les deux longerons (34, 35) de la première structure (33).

7. Machine agricole de travail du sol selon l'une au moins des revendications 1 à 6, caractérisée par le fait que la première structure (33) présente un plan vertical longitudinal (63), et que des traverses (78, 79, 82, 83, 84, 85, 86, 87), liant chaque profilé (66, 67) à la première structure (33), sont formées chacune par une tôle plane s'étendant au moins sensiblement perpendiculairement audit plan vertical longitudinal (63).

8. Machine agricole de travail du sol selon l'une au moins des revendications 1 à 7, caractérisée par le fait que des traverses (88, 89, 90, 91), liant chaque profilé (66, 67) à la première structure (33), sont formées chacune par une tôle de liaison fortement inclinée vers le haut ou verticale et au moins sensiblement perpendiculaire à la direction d'avance (8) au travail.

9. Machine agricole de travail du sol selon la revendication 8, caractérisée par le fait qu'à chaque profilé (66, 67) sont associées deux tôles de liaison (88, 90, 89, 91) : une tôle de liaison avant (88, 89) qui ferme l'espace avant formé entre le profilé (66, 67), le longeron avant (34) de la première structure (33) et le tube de montant (58, 59) correspondant de la deuxième structure (55), et une tôle de liaison arrière (90, 91) qui ferme en grande partie au moins l'espace arrière formé entre le profilé (66, 67) et la partie du longeron arrière (35) de la première structure (33) s'étendant du même côté que ledit profilé (66, 67), chaque tôle de liaison avant (88, 89) étant soudée au longeron avant (34) de la première structure (33) et au tube de montant (58, 59) respectif de la deuxième structure (55), et chaque tôle de liaison arrière (90, 91) étant soudée au longeron arrière (35) de la première structure (33).

10. Machine agricole de travail du sol selon la revendication 9, caractérisée par le fait que chaque tôle de liaison arrière (90, 91) est pourvue d'une découpe (92, 93) au niveau de la partie centrale du châssis (1), et qu'une traverse de raccord (94), vissée sur les deux tôles de liaison arrière (90, 91) et sur la première structure (33), lie les deux tôles de liaison arrière (90, 91) entre elles au niveau desdites découpes (92, 93).

11. Machine agricole de travail du sol selon la revendication 10, caractérisée par le fait que ladite traverse de raccord (94) ferme en grande partie au moins l'ouverture formée par lesdites découpes (92, 93).

12. Machine agricole de travail du sol selon l'une au moins des revendications 9 à 11, prises en combinaison avec la revendication 7, caractérisée par le fait que chaque traverse (78, 79, 82, 83, 84, 85, 86, 87), formée par une tôle plane s'étendant au moins sensiblement perpendiculairement audit plan longitudinal (63), comporte une arête avant et une arête arrière, et que chaque traverse (78, 79, 82, 83, 84, 85, 86, 87) s'étend entre les deux tôles de liaison (88, 89, 90, 91) respectives en étant soudée à la tôle de liaison avant (88, 89) respective le long de son arête avant et à la tôle de liaison arrière (90, 91) respective le long de son arête arrière.

13. Machine agricole de travail du sol selon l'une au moins des revendications 1 à 12, caractérisée par le fait que chaque profilé (66, 67) s'étend, à partir de son extrémité proche du plan vertical central (40) où le profilé (66, 67) est soudé à la deuxième structure (55), vers le bas jusqu'au niveau de la première structure (33) où il est directement ou indirectement soudé.

14. Machine agricole de travail du sol selon l'une au moins des revendications 1 à 13, caractérisée par le fait qu'une première traverse (78, 79), s'étendant au moins sensiblement verticalement, est prévue, en partant de l'extrémité du profilé (66, 67) proche du plan vertical central (40), sensiblement au premier tiers de la longueur dudit profilé (66, 67), qu'une deuxième traverse (82, 83), s'étendant au moins sensiblement verticalement, est prévue, en partant de l'extrémité dudit profilé (66, 67) proche du plan vertical central (40), sensiblement au deuxième tiers de la longueur du profilé (66, 67), qu'une troisième traverse (84, 85) s'étend obliquement vers le bas depuis le voisinage de l'extrémité du profilé (66, 67) proche du plan vertical central (40) jusque dans le voisinage de l'extrémité inférieure de la première traverse (78, 79), et qu'une quatrième traverse (86, 87) s'étend obliquement vers le haut depuis le voisinage de l'extrémité inférieure de la première traverse (78, 79) jusque dans le voisinage de l'extrémité supérieure de la deuxième traverse (82, 83).

15. Machine agricole de travail du sol selon la revendication 14, caractérisée par le fait que l'extrémité inférieure de la première traverse (78, 79), l'extrémité inférieure de la troisième traverse (84, 85) et l'extrémité inférieure de la quatrième traverse (86, 87) sont soudées sur une traverse de liaison (80, 81) soudée à la première structure (33).

16. Machine agricole de travail du sol selon la revendication 15 prise en combinaison avec la revendication 8, caractérisée par le fait qu'à chaque profilé (66, 67) sont associées deux tôles de liaison : une tôle de liaison avant (88, 89) et une tôle de liaison arrière (90, 91), et que chaque traverse de liaison (80, 81) s'étend entre la tôle de liaison avant (88, 89) et la tôle de liaison arrière (90, 91) respectives et est soudée à celles-ci.

17. Machine agricole de travail du sol selon l'une au moins des revendications 13 à 16, caractérisée par le fait que l'extrémité de chaque profilé (66, 67), éloignée du plan vertical central (40) où ledit profilé (66, 67) est soudé directement ou indirectement à la première structure (33), s'étend dans le voisinage intérieur des articulations extérieures (13, 17) liant au châssis (1) les bras oscillants extérieurs (9, 11) des deux barres (2, 4, 3, 5) s'étendant du même côté que ledit profilé (66, 67).

18. Machine agricole de travail du sol selon la revendication 17, caractérisée par le fait que la troisième structure (65) comporte en sus deux profilés en U (95, 96) ouverts vers le bas, dont chacun s'étend depuis l'extrémité du profilé (66, 67) correspondant où celui-ci est soudé directement ou indirectement à la première structure (33) jusqu'à l'extrémité extérieure correspondante de ladite première structure (33), ledit profilé en U (95, 96) étant soudé audit profilé (66, 67) correspondant ainsi qu'à ladite première structure (33).

19. Machine agricole de travail du sol selon la revendication 18, caractérisée par le fait que chaque profilé en U (95, 96) comporte une aile avant (97, 98), une aile arrière (99, 100) et une face supérieure (105, 106) liant les deux ailes (97, 99, 98, 100) entre elles, et que notamment ladite face supérieure (105, 106) est rigidifiée par un organe de rigidification (101, 102).

20. Machine agricole de travail du sol selon la revendication 18 ou 19, caractérisée par le fait que la largeur du profilé en U (95, 96) est au moins sensiblement égale à la largeur de l'extrémité du profilé (66, 67) correspondant éloignée du plan vertical central (40).

21. Machine agricole de travail du sol selon l'une au moins des revendications 18 à 20, caractérisée par le fait qu'à chaque extrémité de la première structure (33) est soudée une plaque latérale (41, 42) s'étendant dans un plan au moins sensiblement vertical et dirigé au moins sensiblement parallèlement à la direction d'avance (8) au travail, lesdites plaques latérales (41, 42) servant à la liaison d'un rouleau (43), lesdits profilés en U (95, 96) étant chacun soudés à la plaque latérale (41, 42) correspondante.

22. Machine agricole de travail du sol selon l'une au moins des revendications 1 à 21, caractérisée par le fait que chaque poutre creuse fermée (66, 67) présente des sections - faites suivant des plans parallèles au plan vertical central (40) - ayant une forme de quadrilatère comportant deux côtés représentant la face supérieure (68, 69), respectivement la face inférieure (70, 71), qui s'étendent au moins sensiblement suivant la direction d'avance (8) au travail.

23. Machine agricole de travail du sol selon la revendication 22, caractérisée par le fait que chaque poutre creuse fermée (66, 67) comporte une face avant (74, 75) et une face arrière (76, 77) plus petites que la face supérieure (68, 69) et la face inférieure (70, 71).

24. Machine agricole de travail du sol selon la revendication 22 ou 23, caractérisée par le fait qu'à l'intérieur de chaque poutre creuse fermée (66, 67) est prévue une nervure (72, 73) qui lie entre elles la face supérieure (68, 69) et la face inférieure (70, 71) de ladite poutre creuse fermée (66, 67), auxquelles elle est soudée.

25. Machine agricole de travail du sol selon la revendication 24, caractérisée par le fait que chaque poutre creuse fermée (66, 67) comporte une face avant (74, 75) et une face arrière (76, 77), et que ladite nervure (72, 73) s'étend au moins sensiblement à mi-distance entre la face avant (74, 75) et la face arrière (76, 77) de la poutre creuse fermée (66, 67) respective.

26. Machine agricole de travail du sol selon l'une des revendications 24 ou 25, caractérisée par le fait que la nervure (72, 73) s'étend au moins sensiblement sur toute la longueur de la poutre creuse fermée (66, 67) correspondante.

## Claims

1. An agricultural machine for working the soil comprising a frame (1) to which are connected, by a plurality of oscillating arms (9, 10, 11, 12), two rows (6, 7) of two bars (2, 3, 4, 5), arranged one behind the other and extending at least approximately perpendicular to the direction of advice (8) during work each of the said bars (2, 3, 4, 5) being:
- connected to the frame (1) by means of at least two oscillating arms (9, 10, 11, 12), each of which is connected respectively to the frame (1) and to the bar (2, 3, 4, 5) by means of a corresponding articulation (13, 14, 15, 16, 17, 18, 19, 20) whose axis is directed at least approximately parallel to the direction of advance (8) during work,
- equipped with tools (21), and
- driven by an alternating movement in a direction at least approximately perpendicular to the direction of advance (8) during work in such a way that the two bars (2, 3, 4, 5) of a same row (6, 7) are at least approximately in opposed in phase, while the movement of one (6) of the rows (6, 7) is at least approximately out of phase by 90° in relation to the movement of the other row (7),
the said movement being generated by an eccentric rod device (22), the said frame (1) which has a central vertical plane (40) directed along the direction of advance (8) during work and which is equipped with two lower connecting brackets (53, 54) provided for the hitching of the machine to a tractor vehicle, comprising:
- a first structure (33) formed by two beams (34, 35) directed at least approximately perpendicular to the direction of advance (8) during work arranged at a certain distance one behind the other in an at least approximately horizontal plane and connected together by means of ribs (41, 42, 44, 45, 46, 47, 48, 49, 50, 51, 52) welded to the said beams (34, 35),
- a second structure (55) formed by two uprights (56, 57) fixed at their respective lower ends to the first structure (33) in the vicinity of the two lower connecting brackets (53, 54) and connected together by welding at their upper ends, the said second structure (55) comprising, at its upper part, an upper connecting bracket (62) also provided for the hitching of the machine to the said tractor vehicle, and
- a third structure (65) formed by two profiles (66, 67) each of which extends from the corresponding upright (56, 57) of the second structure (55), to which it is welded, in the direction of the corresponding end of the first structure (33), to beyond the middle of the corresponding part of the first structure (33) to which it is fixed,
characterised in that:
a) each upright (56, 57) of the second structure (55) has a tube (58, 59) welded at its lower end to the first structure (33),
b) each profile (66, 67) of the third structure (65) is formed by a closed hollow beam, welded, at its end closest to the central vertical plane (40) of the frame (1), to the upper part of the respective upright (56, 57) of the second structure (55) and, at its end furthest from the said central vertical plane (40), directly or indirectly to the first structure (33),
c) the third structure (65) has in addition crosspieces (78, 79, 82, 83, 84, 85, 86, 87, 88, 89, 90, 91) welded to the corresponding profile (66, 67) or forming an integral part of the latter, and welded to the first structure (33), and some (78, 79, 82, 83, 84, 85, 86, 87) of which form an at least approximately continuous triangulation.

2. An agricultural machine for working the soil in accordance with claim 1, characterised in that the spacing between the lower ends of the two upright tubes (58, 59) of the second structure (55) is slightly less than the spacing between the two lower connecting brackets (53, 54).

3. An agricultural machine for working the soil in accordance with claim 1 or 2, characterised in that the two upright tubes (58, 59) extend in a vertical plane directed perpendicularly to the direction of advance (8) during work, and in that each upright tube (58, 59) extends, from its lower end, upwards in the direction of the central vertical plane (40) of the frame (1).

4. An agricultural machine for working the soil in accordance with at least one of claims 1 to 3, characterised in that the width of each profile (66, 67), measured following the direction of advance (8) during work, increases from its end nearest the central vertical plane (40) where the profile (66, 67) is welded to the second structure (55), up to its end furthest from the central vertical plane (40) where the profile (66, 67) is welded directly or indirectly to the first structure (33).

5. An agricultural machine for working the soil in accordance with claim 4, characterised in that the said width increases in an at least approximately constant manner.

6. An agricultural machine for working the soil in accordance with one of claims 1 to 5, characterised in that at the end furthest from the central vertical plane (40) where the profile (66, 67) is welded directly or indirectly to the first structure (33), the width of each profile (66, 67), measured following the direction of advance (8) during work, is at least approximately equal to the interior distance which separates the two beams (34, 35) of the first structure (33).

7. An agricultural machine for working the soil in accordance with one at least of claims 1 to 6, characterised in that the first structure (33) has a longitudinal vertical plane (63), and in that crosspieces (78, 79, 82, 83, 84, 85, 86, 87), connecting each profile (66, 67) to the first structure (33), are each formed by a flat metal sheet extending at least approximately perpendicular to the said longitudinal vertical plane (63).

8. An agricultural machine for working the soil in accordance with one at least of claims 1 to 7, characterised in that crosspieces (88, 89, 90, 91), connecting each profile (66, 67) to the first structure (33), are each formed by a connecting metal sheet strongly inclined upwards or vertical and at least approximately perpendicular to the direction of advance (8) during work.

9. An agricultural machine for working the soil in accordance with claim 8, characterised in that to each profile (66, 67) are associated two connecting metal sheets (88, 90, 89, 91): a front connecting metal sheet (88, 89) which closes the forward space formed between the profile (66, 67), the front beam (34) of the first structure (33) and the corresponding upright tube (58, 59) of the second structure (55), and a rear connecting metal sheet (90, 91) which closes to a large extent at least the rear space formed between the profile (66, 67) and the part of the rear beam (35) of the first structure (33) extending on the same side as the said profile (66, 67), each front connecting metal sheet (88, 89) being welded to the front beam (34) of the first structure (33) and to the respective upright tube (58, 59) of the second structure (55), and each rear connecting metal sheet (90, 91) being welded to the rear beam (35) of the first structure (33).

10. An agricultural machine for working the soil in accordance with claim 9, characterised in that each rear connecting metal sheet (90, 91) is provided with an opening (92, 93) in the region of the central part of the frame (1), and in that a connecting crosspiece (94), screwed onto the two rear connecting metal sheets (90, 91) and onto the first structure (33), connects the two rear connecting metal sheets (90, 91) together in the region of the said openings (92, 93).

11. An agricultural machine for working the soil in accordance with claim 10, characterised in that the said connecting crosspiece (94) closes to a large extent at least the clearance formed by the said openings (92, 93).

12. An agricultural machine for working the soil in accordance with one at least of claims 9 to 11, taken in combination with claim 7, characterised in that each crosspiece (78, 79, 82, 83, 84, 85, 86, 87), formed by a flat metal sheet extending at least approximately perpendicularly to the said longitudinal plane (63), has a front edge and a rear edge, and in that each crosspiece (78, 79, 82, 83, 84, 85, 86, 87) extends between the two respective connecting metal sheets (88, 89, 90, 91) being welded to the respective front connecting metal sheet (88, 89) along its front edge and to the respective rear connecting metal sheet (90, 91) along its rear edge.

13. An agricultural machine for working the soil in accordance with one at least of claim 1 to 12, characterised in that each profile (66, 67) extends, from its end closest to the central vertical plane (40) where the profile (66, 67) is welded to the second structure (55), downwardly to the level of the first structure (33) where it is directly or indirectly welded.

14. An agricultural machine for working the soil in accordance with one at least of claims 1 to 13, characterised in that a first crosspiece (78, 79), extending at least approximately vertically, is provided, going from the end of the profile (66, 67) close to the central vertical plane (40), approximately to the first third of the length of the said profile (66, 67), in that a second crosspiece (82, 83), extending at least approximately vertically, is provided, going from the end of the said profile (66, 67) close to the central vertical plane (40), approximately to the second third of the length of the profile (66, 67), in that a third crosspiece (84, 85) extends obliquely downwards from the vicinity of the end of the profile (66, 67) close to the central vertical plane (40) to the vicinity of the lower end of the first crosspiece (78, 79), and in that a fourth crosspiece (86, 87) extends obliquely upwards from the vicinity of the lower end of the first crosspiece (78, 79) to the vicinity of the upper end of the second crosspiece (82, 83).

15. An agricultural machine for working the soil in accordance with claim 14, characterised in that the lower end of the first crosspiece (78, 79), the lower end of the third crosspiece (84, 85) and the lower end of the fourth crosspiece (86, 87) are welded onto a connecting crosspiece (80, 81) welded to the first structure (33).

16. An agricultural machine for working the soil in accordance with claim 15 taken in combination with claim 8, characterised in that to each profile (66, 67) are joined two connecting metal sheets: a front connecting metal sheet (88, 89) and a rear connecting metal sheet (90, 91), and in that each connecting crosspiece (80, 81) extends between the respective front connecting metal sheet (88, 89) and rear connecting metal sheet (90, 91) and is welded to these two.

17. An agricultural machine for working the soil in accordance with one at least of claims 13 to 16, characterised in that the end of each profile (66, 67), furthest from the central vertical plane (40) where the said profile (66, 67) is welded directly or indirectly to the first structure (33), extends in the inner vicinity of the outer articulations (13, 17) connecting the outer oscillating arms (9, 11) of the two bars (2, 4, 3, 5) extending on the same side as the said profile (66, 67) to the frame (1).

18. An agricultural machine for working the soil in accordance with claim 17, characterised in that the third structure (65) has in addition two U-shaped profiles (95, 96) open downwards, each of which extends from the end of the corresponding profile (66, 67) where this latter is welded directly or indirectly to the first structure (33) to the corresponding outer end of the said first structure (33), the said U-shaped profile (95, 96) being welded to the said corresponding profile (66, 67) as well as to the said first structure (33).

19. An agricultural machine for working the soil in accordance with claim 18, characterised in that each U-shaped profile (95, 96) has a front wing (97, 98), a rear wing (99, 100) and an upper face (105, 106) connecting the two wings (97, 99, 98, 100) together, and in that particularly the upper face (105, 106) is strengthened by a strengthening element (101, 102).

20. An agricultural machine for working the soil in accordance with claim 18 or 19, characterised in that the width of the U-shaped profile (95, 96) is at least approximately equal to the width of the end of the corresponding profile (66, 67) furthest from the central vertical plane (40).

21. An agricultural machine for working the soil in accordance with one at least of claims 18 to 20, characterised in that to each end of the first structure (33) is welded a side plate (41, 42) extending in an at least approximately vertical plane which is directed at least approximately parallel to the direction of advance (8) during work, the said side plates (41, 42) serving to connect a roller (43), the said U-shaped profiles (95, 96) each being welded to the corresponding side plate (41, 42).

22. An agricultural machine for working the soil in accordance with one at least of claims 1 to 21, characterised in that each closed hollow beam (66, 67) has cross-sections - taken in planes parallel to the central vertical plane (40) - having a quadrilateral shape with two sides representing respectively the upper face (68, 69) and the lower face (70, 71), which extend at least approximately along the direction of advance (8) during work.

23. An agricultural machine for working the soil in accordance with claim 22, characterised in that each closed hollow beam (66, 67) has a front face (74, 75) and a rear face (76, 77) smaller than the upper face (68, 69) and the lower face (70, 71).

24. An agricultural machine for working the soil in accordance with claim 22 or 23, characterised in that inside of each closed hollow beam (66, 67) is provided a rib (72, 73) which connects together the upper face (68, 69) and the lower face (70, 71) of the said closed hollow beam (66, 67), to each of which it is welded.

25. An agricultural machine for working the soil in accordance with claim 24, characterised in that each closed hollow beam (66, 67) has a front face (74, 75) and a rear face (76, 77), and in that the said rib (72, 73) extends at least approximately mid-way between the front face (74, 75) and the rear face (76, 77) of the respective closed hollow beam (66, 67).

26. An agricultural machine for working the soil in accordance with one of claims 24 or 25, characterised in that the rib (72, 73) extends at least approximately along the entire length of the corresponding closed hollow beam (66, 67).

## Patentansprüche

1. Landwirtschaftliche Bodenbearbeitungsmaschine, die einen Rahmen (1) aufweist, mit dem durch eine Mehrzahl von oszillierenden Armen (9, 10, 11, 12) zwei Reihen (6, 7) aus zwei Stangen (2, 3, 4, 5) verbunden sind, von welchen Reihen eine hinter der anderen angeordnet ist und die sich zumindest im wesentlichen rechtwinkelig zur Arbeitsvorschubrichtung (8) erstrecken, wobei jede Stange (2, 3, 4, 5):
- mit dem Rahmen (1) durch mindestens zwei oszillierende Arme (9, 10, 11, 12) verbunden ist, von denen jeder mit dem Rahmen (1) bzw. der Stange (2, 3, 4, 5) mittels eines entsprechenden Gelenks (13, 14, 15, 16, 17, 18, 19, 20) mit einer zumindest im wesentlichen zur Arbeitsvorschubrichtung (8) parallelen Achse, verbunden ist,
- mit Werkzeugen (21) versehen ist, und
- eine alternierende Bewegung in eine zumindest im wesentlichen zur Arbeitsvorschubrichtung (8) rechtwinkeligen Richtung ausführen kann, so dass die beiden Stangen (2, 3, 4, 5) einer gleichen Reihe (6, 7) sich zumindest im wesentlichen in einer Phasengegenlage befinden, während die Bewegung der einen (6) der Reihen (6, 7) zumindest im wesentlichen um 90° bezogen auf die Bewegung der anderen Reihe (7) phasenverschoben ist, wobei die Bewegung durch eine Vorrichtung (22) mit Exzenterstangen erzeugt wird,
welcher Rahmen (1), der eine gemäss der Arbeitsvorschubrichtung (8) ausgerichtete zentrale Vertikalebene (40) aufweist, mit zwei unteren Lenkern (53, 54) zum Ankuppeln der Maschine an ein Zugfahrzeug versehen ist, und :
- ein erstes Tragwerk (33), das durch zwei Holme (34, 35) gebildet wird, die zumindest im wesentlichen rechtwinkelig zur Arbeitsvorschubrichtung (8) ausgerichtet, in einem Abstand hintereinander in einer zumindest im wesentlichen horizontalen Ebene angeordnet und miteinander mittels Rippen (41, 42, 44, 45, 46, 47, 48, 49, 50, 51, 52), die mit den Holmen (34, 35) verschweisst sind, verbunden sind,
- ein zweites Tragwerk (55), das durch zwei Stützen (56, 57) gebildet wird, die mit deren entsprechendem unterem Ende am ersten Tragwerk (33) in der Nähe der zwei unteren Lenker (53, 54) befestigt und miteinander durch Verschweissen an deren oberem Ende verbunden sind, wobei das zweite Tragwerk (55) an seinem Oberteil einen oberen Bügel (62) aufweist, der ebenfalls zum Ankuppeln der Maschine an das Zugfahrzeug vorgesehen ist, und
- ein drittes Tragwerk (65), das durch zwei Profilstäbe (66, 67) gebildet wird, von denen sich jeder von der entsprechenden Stütze (56, 57) des zweiten Tragwerks (55), an dem er angeschweisst ist, in Richtung des entsprechenden Endes des ersten Tragwerks (33) bis jenseits der Mitte des entsprechenden Teiles des ersten Tragwerks (33), an dem er befestigt ist, erstreckt,
umfasst, dadurch gekennzeichnet, dass :
a) jede Stütze (56, 57) des zweiten Tragwerks (55) ein Rohr (58, 59) umfasst, das an seinem unteren Ende mit dem ersten Tragwerk (33) verschweisst ist,
b) jeder Profilstab (66, 67) des dritten Tragwerks (65) durch einen verschlossenen Hohlbalken gebildet ist, der an seinem der zentralen Vertikalebene (40) des Rahmens (1) nahegelegenen Ende mit dem oberen Teil der entsprechenden Stütze (56, 57) des zweiten Tragwerks (55) und an seinem von der zentralen Vertikalebene (40) entfernten Ende direkt oder indirekt mit dem ersten Tragwerk (33) verschweisst ist,
c) das dritte Tragwerk (65) überdies Querverstrebungen (78, 79, 82, 84, 85, 86, 87, 88, 89, 90, 91) aufweist, die mit dem entsprechenden Profilstab (66, 67) verschweisst sind oder einen Bestandteil desselben bilden und die mit dem ersten Tragwerk (33) verschweisst sind und von denen gewisse (78, 79, 82, 83, 84, 85, 86, 87) einen zumindest im wesentlichen durchgehenden Dreiecksträger bilden.

2. Landwirtschaftliche Bodenbearbeitungsmaschine nach Anspruch 1, dadurch gekennzeichnet, dass der Abstand zwischen den unteren Enden der Stützrohre (58, 59) des zweiten Tragwerks (55) ein wenig kleiner ist als der Abstand zwischen den zwei unteren Lenkern (53, 54).

3. Landwirtschaftliche Bodenbearbeitungsmaschine nach Anspruch 1 oder 2, dadurch gekennzeichnet, dass sich die zwei Stützrohre (58, 59) in einer rechtwinkelig zur Arbeitsvorschubrichtung (8) ausgerichteten Vertikalebene erstrecken und dass sich jedes Stützrohr (58, 59) von seinem unteren Ende nach oben in Richtung der zentralen Vertikalebene (40) des Rahmens (1) erstreckt.

4. Landwirtschaftiche Bodenbearbeitungsmaschine nach mindestens einem der Ansprüche 1 bis 3, dadurch gekennzeichnet, dass die Breite jedes Profilstabs (66, 67), gemessen m Arbeitsvorschubrichtung (8), von seinem der zentralen Vertikalebene (40) nahegelegenen Ende, wo der Profilstab (66, 67) an dem zweiten Tragwerk (55) angeschweisst ist, bis zu seinem von der zentralen Vertikalebene (40) entfernten Ende, wo der Profilstab (66, 67) direkt oder indirekt, an das erste Tragwerk (33) angeschweisst ist, zunimmt.

5. Landwirtschaftliche Bodenbearbeitungsmaschine nach Anspruch 4, dadurch gekennzeichnet, dass die Breite in zumindest im wesentlichen konstanter Weise zunimmt.

6. Landwirtschaftliche Bodenbearbeitungsmaschine nach einem der Ansprüche 1 bis 5, dadurch gekennzeichnet, dass die Breite jedes Profilstabs (66, 67), in Arbeitsvorschubrichtung (8) gemessen, am von der zentralen Vertikalebene (40) entfernten Ende, wo der Profilstab (66, 67) direkt oder indirekt an das erste Tragwerk (33) angeschweisst ist, zumindest im wesentlichen dem inneren Abstand entspricht, der die beiden Holme (34, 35) des ersten Tragwerks (33) trennt.

7. Landwirtschaftliche Bodenbearbeitungsmaschine nach mindestens einem der Ansprüche 1 bis 6, dadurch gekennzeichnet, dass das erste Tragwerk (33) eine längsverlaufende Vertikalebene (63) aufweist und dass die Querverstrebungen (78, 79, 82, 83, 84, 85, 86, 87), die jeden Profilstab (66, 67) mit dem ersten Tragwerk verbinden, jeweils durch ein flaches Blech gebildet werden, das sich zumindest im wesentlichen rechtwinkelig zur längsverlaufenden Vertikalebene (63) erstreckt.

8. Landwirtschaftliche Bodenbearbeitungsmaschine nach mindestens einem der Ansprüche 1 bis 7, dadurch gekennzeichnet, dass die Querverstrebungen (88, 89, 90, 91), die jeden Profilstab (66, 67) mit dem ersten Tragwerk (33) verbinden, jeweils durch ein stark nach oben geneigtes oder vertikales und zumindest im wesentlichen rechtwinkelig zur Arbeitsvorschubrichtung (8) ausgerichtetes Verbindungsblech gebildet sind.

9. Landwirtschaftiche Bodenbearbeitungsmaschine nach Anspruch 8, dadurch gekennzeichnet, dass mit jedem Profilstab (66, 67) zwei Verbindungsbleche (88, 90, 89, 91) zugeordnet sind : ein vorderes Verbindungsblech (88, 89), das den vorderen Raum abschliesst, der zwischen dem Profilstab (66, 67), dem vorderen Holm (34) des ersten Tragswerks (33) und dem entsprechenden Stützrohr (58, 59) des zweiten Tragwerks (55) gebildet ist, und ein hinteres Verbindungsblech (90, 91), das grossteils zumindest den hinteren Raum abschliesst, der zwischen dem Profilstab (66, 67) und dem Teil des hinteren Holmes (35) des ersten Tragwerks (33) gebildet ist, der sich auf der gleichen Seite erstreckt wie der Profilstab (66, 67) wobei jedes vordere Verbindungsblech (88, 89) mit dem vorderen Holm (34) des ersten Tragwerks (33) und dem entsprechenden Stützrohr (58, 59) des zweiten Tragwerks (55) verschweisst ist, und jedes hintere Verbindungsblech (90, 91) mit dem hinteren Holm (35) des ersten Tragwerks (33) verschweisst ist.

10. Landwirtschaftliche Bodenbearbeitungsmaschine nach Anspruch 9, dadurch gekennzeichnet, dass jedes hintere Verbindungsblech (90, 91) mit einem Ausschnitt (92, 93) im Bereich des zentralen Teils des Rahmens (1) versehen ist und dass ein Verbindungsquerstück (94), das an die zwei hinteren Verbindungsbleche (94), und an das erste Tragwerk (33) angeschraubt ist, die zwei hinteren Verbindungsbleche (90, 91) miteinander im Bereich der Ausschnitte (92, 93) verbindet.

11. Landwirtschaftliche Bodenbearbeitungsmaschine nach Anspruch 10, dadurch gekennzeichnet, dass das Verbindungsquerstück (94) grossteils zumindest die durch die Ausschnitte (92, 93) gebildete Öffnung abschliesst.

12. Landwirtschaftliche Bodenbearbeitungsmaschine nach mindestens einem der Ansprüche 9 bis 11 in Kombination mit Anspruch 7, dadurch gekennzeichnet, dass jede Querstrebung (78, 79, 82, 84, 85, 86, 87), dass jede Querverstrebung (78, 79, 82, 83, 84, 85, 86, 87), die durch eine flaches Blech gebildet ist, das sich zumindest im wesentlichen rechtwinkelig zur Längsebene (63) erstreckt, eine Vorderkante und eine Hinterkante aufweist und dass jede Querverstrebung (78, 79, 82, 83, 84, 85, 86, 87) sich zwischen den zwei entsprechenden Verbindungsblechen (88, 89, 90, 91) erstreckt, wobei sie mit dem entsprechenden vorderen Verbindungsblech (88, 89) entlang ihrer Vorderkante und mit dem entsprechenden hinteren Verbindungsblech (90, 91) entlang ihrer Hinterkante verschweisst ist.

13. Landwirtschaftliche Bodenbearbeitungsmaschine nach mindestens einem der Ansprüche 1 bis 12, dadurch gekennzeichnet, dass jeder Profilstab (66, 67) sich von seinem der zentralen Vertikalebene (40) naheliegenden Ende, an dem der Profilstab (66, 67) mit dem zweiten Tragwerk (55) verschweisst ist, nach unten bis in den Bereich des ersten Tragwerks (33), wo er direkt oder indirekt angeschweisst ist, erstreckt.

14. Landwirtschaftliche Bodenbearbeitungsmaschine nach mindestens einem der Ansprüche 1 bis 13, dadurch gekennzeichnet, dass eine erste Querverstrebung (78, 79), die sich zumindest im wesentlichen vertikal erstreckt, ausgehend von dem der zentralen Verikalebene (40) naheliegenden Ende des Profilstabes (66, 67) im wesentlichen im ersten Drittel der Länge des Profilstabes (66, 67) vorgesehen ist, dass eine zweite Querverstrebung (82, 83), die sich zumindest im wesentlich vertikal erstreckt, ausgehend von dem der zentralen Vertikalebene (40) naheliegenden Ende des Profilstabes (66, 67) im wesentlichen im zweiten Drittel der Länge Profilstabes (66, 67) vorgesehen ist, dass eine dritte Querverstrebung (84, 85) sich schräg nach unten von der Nähe des der zentralen Vertikalebene (40) naheliegenden Endes des Profilstabes (66, 67) bis in die Nähe des unteren Endes der ersten Querverstrebung (78, 79) erstreckt und dass eine vierte Querverstrebung (86, 87) sich schräg nach oben von der Nähe des unteren Endes der ersten Querverstrebung (78, 79) bis in die Nähe des oberen Endes der zweiten Querverstrebung (82, 83) erstreckt.

15. Landwirtschaftliche Bodenbearbeitungsmaschine nach Anspruch 14, dadurch gekennzeichnet, dass das untere Ende der ersten Querverstrebung (78, 79), das untere Ende der dritten Querverstrebung (84, 85) und das untere Ende der vierten Querverstrebung (86, 87) an eine Verbindungsstrebe (80, 81), die mit dem ersten Tragwerk (33) verschweisst ist, angeschweisst sind.

16. Landwirtschaftlichen Bodenbearbeitungsmaschine nach Anspruch 15 in Kombination mit Anspruch 8, dadurch gekennzeichnet, dass jedem Profilstab (66, 67) zwei Verbindungsbleche zugeordnet sind : ein vorderes Verbindungsblech (88, 89) und ein hinteres Verbindungsblech (90, 91), und dass jede Verbindungsstrebe (80, 81) sich zwischen dem entsprechenden vorderen Verbindungsblech (88, 89) und dem entsprechenden hinteren Verbindungsblech (88, 89) und dem entsprechenden hinteren Verbindungsblech (90, 91) erstreckt und mit diesen verschweisst ist.

17. Landwirtschaftliche Bodenbearbeitungsmaschine nach mindestens einem der Ansprüche 13 bis 16, dadurch gekennzeichnet, dass das von der zentralen Vertikalebene (40) entfernte Ende jedes Profilstabes (66, 67), wo der Profilstab (66, 67) direkt oder indirekt mit dem ersten Tragwerk (33) verschweisst ist, sich in die Nähe innerhalb von den äusseren Gelenken (13, 17) erstrecken, die die äusseren oszillierenden Arme (9, 11) der sich auf der gleichen Seite wie der Profilstab (66, 67) erstreckenden beiden Stangen (2, 4, 3, 5) mit dem Rahmen (1) verbinden.

18. Landwirtschaftliche Bodenbearbeitungsmaschine nach Anspruch 17, dadurch gekennzeichnet, dass das dritte Tragwerk (65) überdies zwei nach unten offene U-Profilstücke (95, 96) umfasst, von denen sich jedes vom Ende des entsprechenden Profilstabes (66, 67), wo er direkt oder indirekt mit dem ersten Tragwerk (33) verschweisst ist, bis zum entsprechenden äusseren Ende des ersten Tragwerks (33) erstreckt, wobei das U-Profilstück (95, 96) mit dem entsprechenden Profilstab (66, 67) ebenso wie mit dem ersten Tragwerk (33) verschweisst ist.

19. Landwirtschaftliche Bodenbearbeitungsmaschine nach Anspruch 18, dadurch gekennzeichnet dass, jedes U-Profilstück (95, 96) einen Vorderflügel (97, 98), einen Hinterflügel (99, 100) und einen Oberteil (105, 106) durch ein Versteifungsorgan (101, 102) versteift ist.

20. Landwirtschaftliche Bodenbearbeitungsmaschine nach Anspruch 18 oder 19, dadurch gekennzeichnet, dass die Breite des U-Profilstückes (95, 96) zumindest im wesentlichen gleich der Breite des entsprechenden, von der zentralen Vertikalebene (40) entfernten Endes des Profilstabes (66, 67) ist.

21. Landwirtschaftliche Bodenbearbeitungsmaschine nach mindestens einem der Ansprüche 18 bis 20, dadurch gekennzeichnet, dass an jedes Ende des ersten Tragwerks (33) eine Seitenplatte (41, 42) angeschweisst ist, die sich in einer zumindest im wesentlichen vertikalen und zumindest im wensentlichen parallelen zur Arbeitsvorschubrichtung (8) ausgerichteten Ebene erstreckt, welche Seitenplatten (41, 42) zur Verbindung einer Walze (43) dienen, wobei die U-Profilstücke (95, 96) jeweils mit der entsprechenden Seitenplatte (41, 42) verschweisst sind.

22. Landwirtschaftliche Bodenbearbeitungsmaschine nach mindestens einem der Ansprüche 1 bis 21, dadurch gekennzeichnet, dass jeder verschlossene Hohlbalken (66, 67) Querschnitte - ausgeführt in zur zentralen Vertikalebene (40) parallelen Ebenen - aufweist, welche eine Vierecksform haben, die zwei Seiten Aufweisen, die den Oberteil (68, 69) bzw. den Unterteil (70, 71) darstellen, welche sich zumindest im wesentlichen in die Arbeitsvorschubrichtung (8) erstrecken.

23. Landwirtschaftliche Bodenbearbeitungsmaschine nach Anspruch 22, dadurch gekennzeichnet, dass jeder verschlossene Hohlbalken (66, 67) einen Vorderteil (74, 75) und einen Hinterteil (76, 77) umfasst, welche kleiner sind als der Oberteil (68, 69) und der Hinterteil (70, 71).

24. Landwirtschaftliche Bodenbearbeitungsmaschine nach Anspruch 22 oder 23, dadurch gekennzeichnet, dass im Inneren jedes verschlossenen Hohlbalkens (66, 67) einen Rippe (72, 73) vorgesehen ist, die den Oberteil (68, 69) und den Unterteil (70, 71) des verschlossenen Hohlbalkens (66, 67) miteinander verbindet, mit welchen sie verschweisst ist.

25. Landwirtschaftliche Bodenbearbeitungsmaschine nach Anspruch 24, dadurch gekennzeichnet, dass jeder verschlossene Hohlbalken (66, 67) einen Vorderteil (74, 75) und einen Hinterteil (76, 77) umfasst und dass die Rippe (72, 73) sich zumindest im wesentlichen im halben Abstand zwischen dem Vorderteil (74, 75) und dem Hinterteil (76, 77) des entsprechenden verschlossenen Hohlbalkens (66, 67) erstreckt.

26. Landwirtschaftliche Bodenbearbeitungsmaschine nach Anspruch 24 oder 25, dadurch gekennzeichnet, dass die Rippe (72, 73) sich zumindest im wesentlichen über die ganze Länge des entsprechenden verschlossenen Hohlbalkens (66, 67) erstreckt.
